# EUROPEAN PATENT APPLICATION

(11) **EP 2 952 852 A1**
(43) Date of publication of application: **09.12.2015**
(21) Application number: 13873709.3
(22) Date of filing: 13.12.2013
(51) Int. Cl.: G01C 19/5776, G01P 15/18

(54) **INERTIAL FORCE DETECTION DEVICE**

(30) Priority: 01.02.2013 JP 2013018020
(71) Applicant: Hitachi Automotive Systems, Ltd., Hitachinaka-shi, Ibaraki 312-8503 (JP)
(72) Inventor: NAKAMURA Toshiaki, Tokyo 100-8280 (JP); HAYASHI Masahide, Hitachinaka-shi Ibaraki 312-8503 (JP); OHSAKA Ichiro, Hitachinaka-shi Ibaraki 312-8503 (JP); TSURU Yasutaka, Ibaraki 312-8503 (JP); MAEDA Daisuke, Ibaraki 312-8503 (JP)
(74) Representative: MERH-IP Matias Erny Reichl Hoffmann
(86) International application number: PCT/JP2013/083413
(87) International publication number: WO 2014/119143

(57) **Abstract**

In order to provide an inertial force detection device with improved reliability, an inertial force detection device that has a vibrating body displaceable in a first direction and a second direction perpendicular to each other and detects, as angular velocity, the amount of displacement when the vibrating body is displaced in the second direction due to the occurrence of angular velocity in a state where the vibrating body is made to vibrate in the first direction includes, for example, digital signal processing means, means for detecting a failure in a register unit and a calculation unit of the digital signal processing means, and means for outputting a failure detection result to the outside.

## Description

### Technical Field

The present invention relates to diagnosis of an inertial sensor for angular velocity, acceleration, or the like.

### Background Art

In order to secure safety at the time of traveling of an automobile, sensors which detect angular velocity or acceleration are required. When these sensors are provided and operated in an environment in which a temperature change range is wide and the influence of vibration or electromagnetic noise is significant, like an engine room, a measure is required to secure high reliability of sensor output.

Accordingly, a sensor which is used in such an environment is provided with a self-diagnosis function inside thereof, and transmits diagnostic information to an external device along with a sensor output. The external device determines whether or not the received sensor output is normal based on the received diagnostic information, and determines whether or not to use the sensor output.

PTLs 1 and 2 describe a sensor which detects inertial force, such as angular velocity or acceleration, and transmits a detection result and a diagnostic result for the operation state of the sensor to an external device. In the technique described in PTL 1, a failure detection output is output in a time-division manner by an output circuit at the same time as the sensor output. In the technique described in PTL 2, processing, such as sensor control, sensor output correction, and failure diagnosis, is executed by program processing using a digital signal processor.

### Citation List

### Patent Literature

PTL 1: Japanese Patent No. 4311496
PTL 2: JP-A-2000-2542

### Summary of Invention

### Technical Problem

In PTL 1 described above, a circuit configuration is made in which a drive circuit of a sensor, a detection circuit, and a processing circuit are separated, and failure detection is performed for each circuit. For this reason, an individual failure detection circuit is required for each circuit. In PTL 2, a digital signal processor which is digital signal processing means executes processing, such as sensor driving, detection, and diagnosis. For this reason, diagnosis of a register unit and a calculation unit is required.

An object of the invention is to provide an inertial force detection device with improved reliability.

### Solution to Problem

An inertial force detection device according to the invention includes digital signal processing means, means for detecting a failure in a register unit and a calculation unit of the digital signal processing means, and means for outputting the failure detection result to the outside.

### Advantageous Effects of Invention

According to the invention, it is possible to provide an inertial force detection device with improved reliability. Brief Description of Drawings
[Fig. 1] Fig. 1 is a block diagram of an inertial sensor diagnostic device of a first embodiment.
[Fig. 2] Fig. 2 is a flowchart of processing for storage in a program ROM of the first embodiment.
[Fig. 3] Fig. 3 is a flowchart of DSP register diagnostic processing.
[Fig. 4] Fig. 4 is a flowchart of DSP calculation diagnostic processing.
[Fig. 5] Fig. 5 is a block diagram of a DSP failure detection unit.
[Fig. 6] Fig. 6 is a block diagram of a communication unit of the first embodiment.
[Fig. 7] Fig. 7 shows details of a transmission data time chart of the communication unit and diagnostic information.
[Fig. 8] Fig. 8 is a block diagram of an inertial sensor diagnostic device of a second embodiment.
[Fig. 9] Fig. 9 is a flowchart of processing for storage in a program ROM of the second embodiment.
[Fig. 10] Fig. 10 is a block diagram of a communication unit of the second embodiment.

### Description of Embodiments

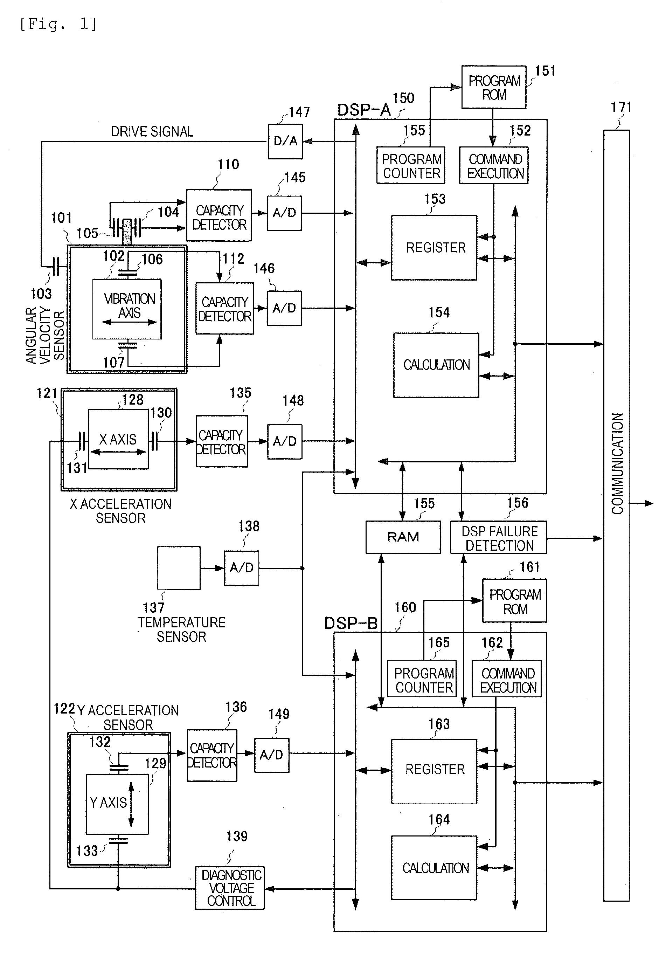

Fig. 1 is a block diagram of an inertial sensor diagnostic device according to a first embodiment of the invention. In Fig. 1, an angular velocity sensor 101 is a sensor which detects angular velocity, and includes a vibrator 102, a fixed electrode 103, electrodes 104 and 105, and fixed electrodes 106 and 107.

The vibrator 102 has a predetermined mass and vibrates in a vibration axis direction at a predetermined vibration frequency. The fixed electrode 103 makes electrostatic force act in order to adjust the vibration amplitude and vibration frequency of the vibrator 102 in the vibration direction. The electrodes 104 and 105 detect the vibration amplitude and vibration frequency of the vibrator 102 by change in electrostatic capacity. The fixed electrodes 106 and 107 detect displacement, which occurs in the vibrator 102 in a direction perpendicular to the vibration axis by Coriolis force occurring when angular velocity is applied, by change in electrostatic capacity.

A capacity detector 110 detects displacement in the vibration direction acting on the angular velocity sensor 101 by detecting the difference between electrostatic capacity between the angular velocity sensor 101 and the fixed electrode 104 and electrostatic capacity between the angular velocity sensor 101 and the fixed electrode 105. The output of the capacity detector 110 is converted to a digital signal by an AD converter 145, and the digital signal is input to a digital signal processor (hereinafter, referred to as DSP-A) 150.

A capacity detector 112 detects displacement by Coriolis force acting on the vibrator 102 by detecting the difference between electrostatic capacity between the vibrator 102 and the fixed electrode 106 and electrostatic capacity between the vibrator 102 and the fixed electrode 107. A detection result is converted to a digital signal by an AD converter 146, and the digital signal is input to the DSP-A 150.

An X acceleration sensor 121 has a vibrator 128, and electrodes 130 and 131. The vibrator 128 is displaced when acceleration is applied in a right-left direction (hereinafter, referred to as X-axis direction). The electrode 130 detects the amount of displacement in the X-axis direction by change in electrostatic capacity. The electrode 131 applies a voltage to forcibly displace the vibrator 128 in the X-axis direction. The capacity detector 135 detects change in electrostatic capacity by displacement and outputs the change as a voltage. An AD converter 148 converts the voltage detected by the capacity detector 135 to a digital signal and inputs the digital signal to the DSP-A 150.

A Y acceleration sensor 122 has a vibrator 129, and electrodes 132 and 133. The vibrator 129 is displaced when acceleration is applied in a front-back direction (hereinafter, referred to as Y-axis direction). The electrode 132 detects the amount of displacement in the Y-axis direction by change in electrostatic capacity. The electrode 133 applies a voltage to forcibly displace the vibrator 129 in the Y-axis direction. The capacity detector 136 detects change in electrostatic capacity by displacement and outputs the change as a voltage. An AD converter 149 converts the voltage detected by the capacity detector 136 to a digital signal and inputs the digital signal to a DSP-B 160.

A temperature sensor 137 detects an ambient temperature, converts the ambient temperature to a voltage, and outputs the voltage. An AD converter 138 converts the output voltage of the temperature sensor 137 to a digital signal and inputs the digital signal to the DSP-A 150 and the DSP-B 160.

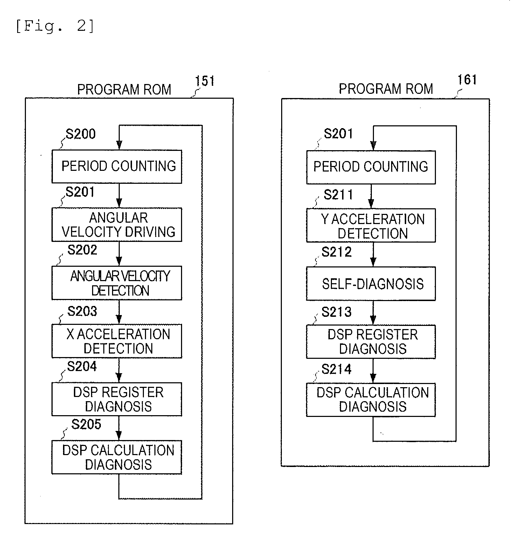

A program ROM 151 is a read only memory which stores a processing program to be executed by the DSP-A 150. An example of the program to be stored will be described referring to Fig. 2.

The DSP-A 150 is a digital signal processor which executes driving of the angular velocity sensor 101, detection of angular velocity, and detection of acceleration in the X direction. The DSP-A 150 includes a program counter 155 which outputs an address signal for reading memory data to the program ROM 151 storing a program for executing sensor control, a command execution unit 152 which interprets and executes input memory data, a register 153 which stores data input from the outside and calculation data, and a calculation unit 154 which executes digital calculation according to an instruction from the command execution unit 152.

A program ROM 161 is a read only memory which stores a processing program to be executed by the DSP-B 160. An example of the program to be stored will be described referring to Fig. 2.

The DSP-B 160 is a digital signal processor which executes detection of acceleration in the Y direction and sensor diagnosis. The DSP-B 160 includes a program counter 165 which outputs an address signal for reading memory data to the program ROM 156 storing a program for executing sensor control, a command execution unit 162 which interprets and executes input memory data, a register 163 which stores data input from the outside and calculation data, and a calculation unit 164 which executes digital calculation according to an instruction from the command execution unit 162.

A RAM 155 is a random access memory which stores temporary data for transferring data after calculation from the DSP-A 150 to the DSP-B 160.

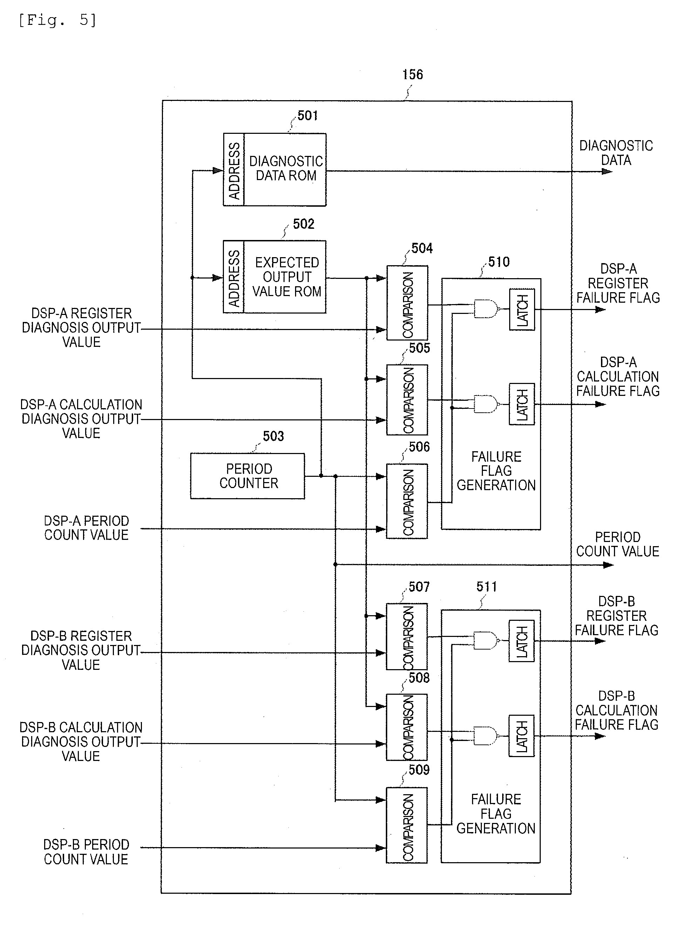

A DSP failure detection unit 156 performs output of diagnostic data for diagnosing the DSP-A 150 and the DSP-B 160, confirmation of an expected value of diagnostic output, and failure detection for the two DSPs described above and outputs a failure flag to a communication 171. A specific example will be described referring to Fig. 5.

A diagnostic voltage control 139 is a circuit which forcibly displaces the vibrator 128 in the X-axis direction and the vibrator 129 in the Y-axis direction and forcibly applies a voltage to the electrodes 131 and 133 in order to diagnose whether or not the acceleration sensor is normally operating.

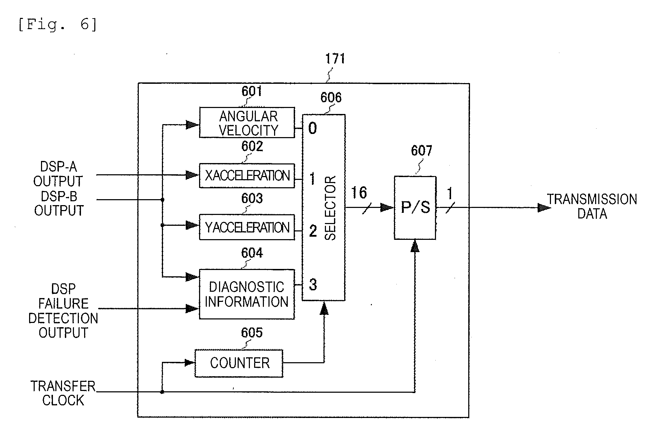

The communication unit 171 is a circuit which transmits the outputs of the angular velocity sensor 101 and the acceleration sensors 121 and 122 and the diagnostic result to the external device. A specific example will be described referring to Fig. 6.

Fig. 2 is a diagram illustrating a sensor control program of this example stored in the program ROMs 151 and 161. Hereinafter, the respective steps of Fig. 2 will be described. First, the program ROM 151 will be described.

### (Step S200)

Period counting is a period counter which manages the number of executions of a series of processing in the program ROM 151. This is processing for incrementing 1 each time the processing of Steps 201 to 205 ends once.

### (Step S201)

Angular velocity driving is processing for causing the angular velocity sensor 101 to vibrate in the vibration axis direction. The frequency and amplitude of a displacement signal of the vibrator 102 obtained through the capacity detector 110 and the AD converter 145 are adjusted such that the vibration of the vibrator 102 in the drive direction is put in a resonant state, thereby generating an AC drive signal. The drive signal is output from the DSP-A 150 to the fixed electrode 103 through the DA conversion unit 147 to cause the angular velocity sensor 101 to constantly vibrate at a resonant frequency.

### (Step S202)

Angular velocity detection performs synchronous detection in the resonant frequency for the displacement signal of the vibrator 102 obtained through the capacity detector 112 and the AD converter 146 to detect an amplitude value. The obtained amplitude value is stored in the register 153 as detection data of angular velocity. Thereafter, temperature correction calculation and high-frequency noise component removal by a low-pass filter are executed for the detection value of the angular velocity sensor stored in the register 153 according to the detection value of the temperature sensor 137.

### (Step S203)

X acceleration detection stores a displacement signal of the vibrator 128 obtained through the capacity detector 135 and the AD converter 148 of Fig. 1 in the register 153 as an acceleration sensor output in the right-left direction. Thereafter, temperature correction calculation and high-frequency noise component removal by a low-pass filter are executed for the output of the acceleration sensor 128 according to the detection value of the temperature sensor 137.

### (Step S204)

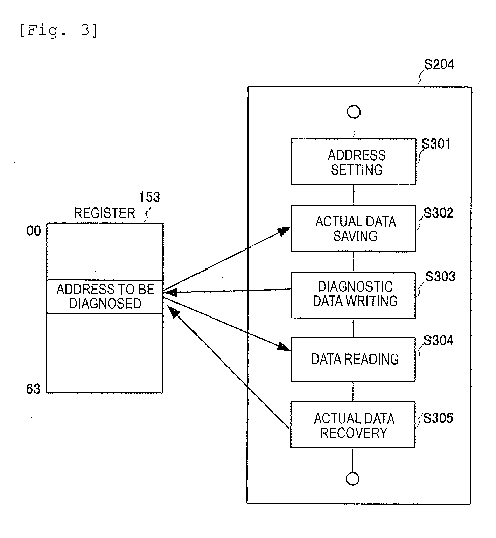

DSP-A register diagnosis is processing for executing diagnosis for the register unit 153 in the DSP-A 150 of Fig. 1. A specific example will be described referring to Fig. 3.

### (Step S205)

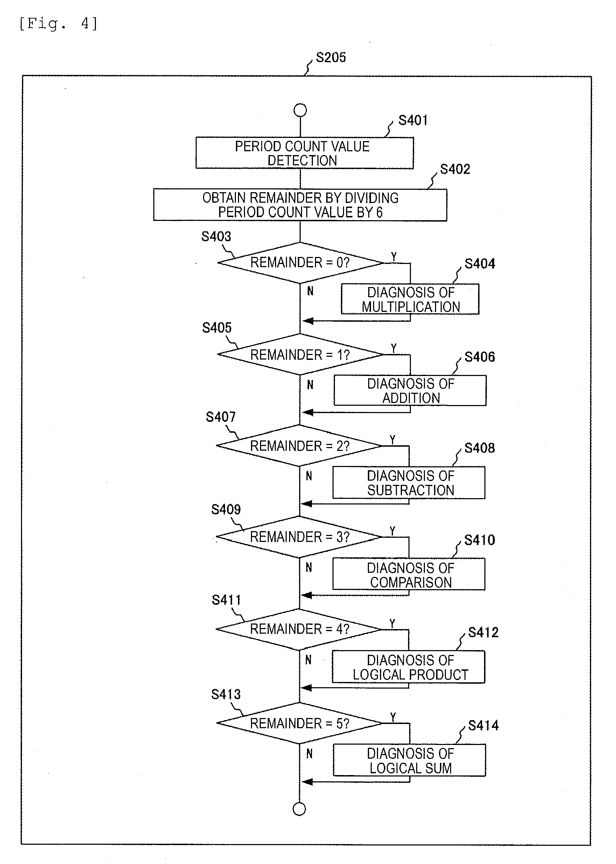

DSP-A calculation diagnosis is means for executing diagnosis for the calculation unit 154 in the DSP-A 150 of Fig. 1. A specific example will be described referring to Fig. 4.

The DSP-A 150 of Fig. 1 executes the five steps described above in order. After Step S205 is executed, the process returns to Step S201 and a series of steps are repeatedly executed again in order. For example, Step S201 to Step S205 are repeatedly executed at 5 kHz (1 period: 0.2 milliseconds) .

Next, the program ROM 158 will be described below.

### (Step S210)

Period counting is a period counter which manages the number of executions of a series of processing in the program ROM 161. This is processing for incrementing 1 each time the processing of Steps 211 to 214 ends once.

### (Step S211)

Y acceleration detection stores a displacement signal of the vibrator 129 obtained through the capacity detector 136 and the AD converter 149 of Fig. 1 in the register 163 as an acceleration sensor output in the front-back direction. Thereafter, temperature correction calculation and high-frequency noise component removal by a low-pass filter are executed for the output of the acceleration sensor 129 according to the detection value of the temperature sensor 137.

### (Step S212)

Self-diagnosis executes the following processing.
(1) It is determined whether or not the drive frequency and drive amplitude of the vibrator 101 in the vibration axis direction are normal based on the output of angular velocity driving in Step S201.
(2) It is determined whether or not angular velocity output is normal based on the output of the angular velocity detection S202.
(3) It is determined whether or not the X direction acceleration sensor is normally operating based on the output of the X acceleration correction S203.
(4) It is determined whether or not the Y direction acceleration sensor is normally operating based on the output of the Y acceleration correction S212.

### (Step S213)

DSP register diagnosis is means for executing diagnosis for the register unit 160 in the DSP-B 160 of Fig. 1. Specific processing will be described referring to Fig. 3.

### (Step S214)

DSP calculation diagnosis is means for executing diagnosis for the calculation unit 161 in the DSP-B 160 of Fig. 1. Specific processing will be described referring to Fig. 4.

The DSP-B 160 executes the four steps described above in order. After Step S214 is executed, the process returns to Step S201 and a series of steps are repeatedly executed again in order. For example, Step S211 to Step S215 are repeatedly executed at 5 kHz (1 period: 0.2 milliseconds).

Fig. 3 is a flowchart illustrating the DSP register diagnosis S204 of Fig. 2. The DSP register diagnosis S213 of Fig. 2 is the same processing. The register diagnosis allocates a unique address to a register in the DSP and executes diagnosis of one register each time the processing of the program ROMs 151 and 161 of Fig. 2 is executed once. For example, when the number of registers is 100, and when Step S201 to Step S205 are repeatedly executed at 5 kHz (1 period: 0.2 milliseconds), the diagnosis of all registers ends in 100 periods (20 milliseconds). As a diagnostic method, after data stored in the register is saved, diagnostic test data is written and written data is read and confirmed, thereby diagnosing the writing, reading, and data storing functions of the register. Hereinafter, the respective steps will be described.

### (Step S301)

Address setting is means for setting the address of one register to be diagnosed in the register unit 153 of Fig. 1. Here, only one address of a register to be diagnosed is designated. The address is incremented by 1 each time this processing is executed.

### (Step S302)

Actual data saving is a function of temporarily saving data stored in a register to be diagnosed in the RAM 155 of Fig. 1.

### (Step S303)

Diagnostic data writing is processing for writing diagnostic test data output from the DSP failure detection 156 of Fig. 1.

### (Step S304)

Data reading is processing for reading data from a register, in which diagnostic data is written.

### (Step S305)

Actual data recovery is processing for reading original data stored in the RAM 155 of Fig. 1 by the actual data saving of Step S302 and writing data in a register to be diagnosed to return data to original stored data.

Fig. 4 is a flowchart illustrating the DSP calculation diagnosis S205 of Fig. 2. The DSP calculation diagnosis S214 of Fig. 2 is the same processing. The calculation diagnosis allocates a unique address to a register in the DSP and executes diagnosis of one calculator each time the processing of the program ROMs 151 and 161 of Fig. 2 is executed once. For example, when the number of calculators is six, and when Step S201 to Step S205 are repeatedly executed at 5 kHz (1 period: 0.2 milliseconds), the diagnosis of all calculators ends in six periods (1.2 milliseconds). As a diagnostic method, test data which is an operator value and an operand value for diagnosis are input to two input parts of a calculator to be diagnosed, data after calculation is read and confirmed, thereby diagnosing the input, output, and calculation functions of the calculator. Hereinafter, the respective steps will be described.

### (Step S401)

Period count value detection is processing for taking a period count value (of Step S200) of the program ROM 151 of Fig. 2.

### (Step S402)

Processing for obtaining a remainder by dividing the period count value by 6 is processing for selects and executes one from among the six kinds of following processing in order in each period.

### (Step S403)

When the remainder after the division of the period count value by 6 is "0", the process progresses to Step S404. When the remainder is other than "0", the process progresses to Step S405.

### (Step S404)

Diagnosis of a multiplier which is one function of the calculation units 154 and 164 in the DSP-A and the DSP-B of Fig. 1 is executed. As a specific operation, a multiplication value and a value to be multiplied are input from the DSP failure detection unit 156 of Fig. 1, and data after the execution of multiplication is output to the DSP failure detection unit 156.

### (Step S405)

When the remainder after the division of the period count value by 6 is "1", the process progresses to Step S406. When the remainder is other than "1", the process progresses to Step S407.

### (Step S406)

Diagnosis of an adder which is one function of the calculation units 154 and 161 in the DSP-A and the DSP-B of Fig. 1 is executed. As a specific operation, an addition value and a value to be added are input from the DSP failure detection unit 156 of Fig. 1, and data after the execution of addition is output to the DSP failure detection unit 156.

### (Step S407)

When the remainder after the division of the period count value by 6 is "2", the process progresses to Step S408. When the remainder is other than "2", the process progresses to Step S409.

### (Step S408)

Diagnosis of a subtracter which is one function of the calculation units 154 and 161 in the DSP-A and the DSP-B of Fig. 1 is executed. As a specific operation, a subtraction value and a value to be subtracted are input from the DSP failure detection unit 156 of Fig. 1, and data after the execution of subtraction is output to the DSP failure detection unit 156.

### (Step S409)

When the remainder after the division of the period count value by 6 is "3", the process progresses to Step S410. When the remainder is other than "3", the process progresses to Step S411.

### (Step S410)

Diagnosis of a comparator which is one function of the calculation units 154 and 161 in the DSP-A and the DSP-B of Fig. 1 is executed. As a specific operation, a comparison value and a value to be compared are input from the DSP failure detection unit 156 of Fig. 1, and data after the execution of comparison is output to the DSP failure detection unit 156.

### (Step S411)

When the remainder after the division of the period count value by 6 is "4", the process progresses to Step S412. When the remainder is other than "4", the process progresses to Step S413.

### (Step S412)

Diagnosis of a logical product unit which is one function of the calculation units 154 and 161 in the DSP-A and the DSP-B of Fig. 1 is executed. As a specific operation, a logical product value and a value subject to logical product operation are input from the DSP failure detection unit 156 of Fig. 1, and data after the execution of AND is output to the DSP failure detection unit 156.

### (Step S413)

When the remainder after the division of the period count value by 6 is "5", the process progresses to Step S414. When the remainder is other than "5", the processing ends.

### (Step S414)

Diagnosis of a logical sum unit which is one function of the calculation units 154 and 161 in the DSP-A and the DSP-B of Fig. 1 is executed. As a specific operation, a logical sum value and a value subject to logical sum operation are input from the DSP failure detection unit 156 of Fig. 1, and data after the execution of OR is output to the DSP failure detection unit 156.

Fig. 5 is a diagram illustrating the failure detection unit 156 shown in Fig. 1. A diagnostic data storage unit 501 is means for storing diagnostic test input data for executing diagnosis of the register units 153 and 163 and the calculation units 154 and 164 of the DSP-A 150 and the DSP-B 160. An expected output value storage unit 502 is means for storing an expected output value for determining whether or not the output after the execution of diagnosis is normal. These storage means can be implemented by a register file or a programmable ROM. A period counter 503 is means for incrementing 1 in synchronization with the execution of the programs of the program ROMs 151 and 161 of Fig. 2 in one period. Comparisons 504 to 509 compare two pieces of input data, an output "1" if both match each other, and an output "0" if both do not match each other. A failure flag generation unit 510 is means for creating and outputting a failure flag based on the outputs of the comparators 504 to 506.

As a specific operation, the comparator 506 compares the period count value of Step S200 of Fig. 2 with the output of the period counter 503, if both match each other, it is determined that the operation of the program counter 155 of the DSP-A is normal, and the comparator 506 outputs "1". The comparator 505 compares the register diagnosis output of the DSP-A of Fig. 3 with the output of the expected output value 502, and if both match each other, outputs "1". The logical sum of the outputs of the two comparators is obtained, the output is further inverted, and "0" representing normality is output as a DSP-A register failure flag. On the other hand, when any output outputs abnormality "1" even in one period, the value is held by an internal latch, and thereafter, "1" representing a failure is constantly output as a DSP-A register failure flag. The same processing is executed for a DSP-A calculation failure flag, a DSP-B register failure flag, and a DSP-B calculation failure flag.

Fig. 6 is a diagram illustrating the communication unit 171 shown in Fig. 1. The communication unit 171 transmits the sensor outputs of angular velocity, X acceleration, and Y acceleration to the external device. The outputs of self-diagnosis and DSP failure detection are also transmitted to the external device. Specific processing will be described below. Registers 601 to 603 store sensor outputs detected and corrected by the angular velocity detection (Step S202), the X acceleration detection (Step S203), and the Y acceleration detection (Step S211) of Fig. 2. A register 304 stores the diagnostic result of the self-diagnostic processing (Step S212) and the output of the DSP failure detection unit 156. A counter 605 increments 1 each time 16 transfer clocks are input from the external device, and repeatedly outputs the value of 0 to 3. A selector 606 selects and outputs the four register outputs according to the output of the counter 605. A parallel/serial conversion 607 converts 16-bit parallel data output from the selector 606 to one-bit serial data and outputs serial data to the outside as transmission data.

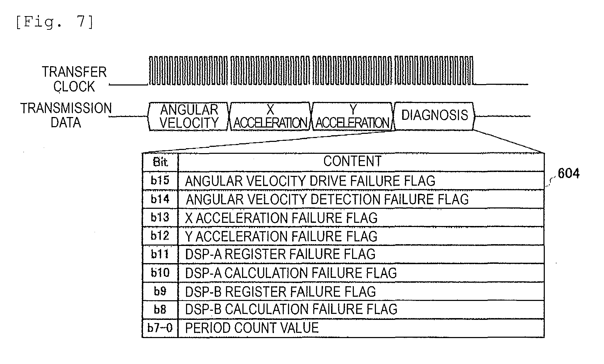

Fig. 7 shows a time chart of communication of this example. If the transfer clocks are input from the external device, data stored in the registers 601 to 604 is output in order bit by bit in terms of 16 clocks. Next, an example of output diagnostic information will be described. Data stored in the diagnostic information 604 has 16 bits. Each bit represents a diagnostic result for each of the following items by 0 (normal) or 1 (abnormal).
(bit b15) the driving function of the angular velocity sensor 101 (Step S212)
(bit b14) the angular velocity detection function of the angular velocity sensor 101 (Step S212)
(bit b13) the acceleration detection function of the X direction acceleration sensor 128 (Step S212)
(bit b12) the acceleration detection function of the Y direction acceleration sensor 128 (Step S212)
(bit b11) the register unit diagnostic result of the DSP-A (Step S204)
(bit b10) the calculation unit diagnostic result of the DSP-A (Step S205)
(bit b9) the register diagnostic result of the DSP-B (Step S213)
(bit b8) the calculation unit diagnostic result of the DSP-B (Step S214)

The least eight bits output the value of the period counter, and represents that the sensor normally performs the periodic operation.
(bits b7 to b0) the period count value (output of period counter 503)

According to this example, it is possible to obtain the failure detection results of the DSP-A and the DSP-B at the time of the operation of the inertial sensor, and to improve reliability of sensor output. The same inertial force detection processing is performed by the two digital signal processing means (DSP-A and DSP-B), whereby it is possible to obtain the detection signal of the normal inertial force sensor even if one of the two digital signal processing means fails.

Next, a second embodiment will be described.

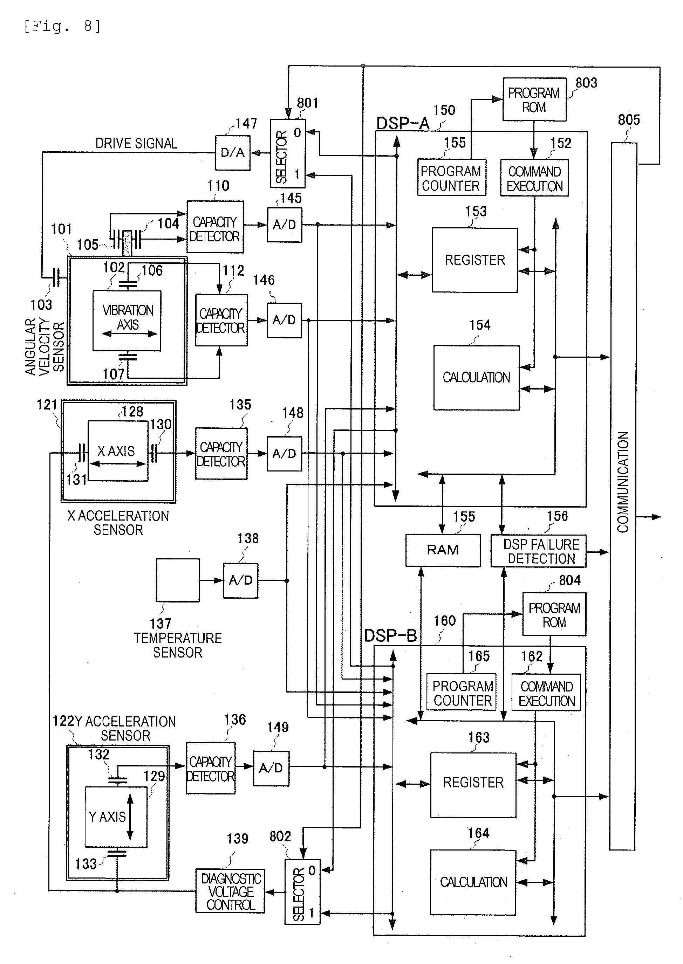

A difference from the first embodiment is that the DSP-A and the DSP-B execute the same processing. When the register unit and the calculation unit of the DSP-A are normal, an inertial force detection signal of the DSP-A is sent to the outside. When at least one of the register unit and the calculation unit of the DSP-A is abnormal, an inertial force detection signal of the DSP-B is sent to the outside. Such a processing configuration is made, whereby a normal sensor output can be transmitted even when one DSP fails. An example will be described referring to Figs. 8 to 10.

Fig. 8 is a block diagram of an inertial force detection device according to a second embodiment of the invention. Compared to Fig. 1 which is the overall block diagram of the first embodiment, the outputs of the AD converters 145 to 149 are input to both of the DSP-A and the DSP-B. When there is a failure in the register or the calculation unit of the DSP-A, the output of the DSP-B is selected by a selector 801 in response to a DSP selection signal created by a communication unit 805 as input to the DA conversion unit 147 for drive signal output. Similarly, the output of the DSP-B is selected by a selector 802 as an input voltage to the diagnostic voltage control unit 139.

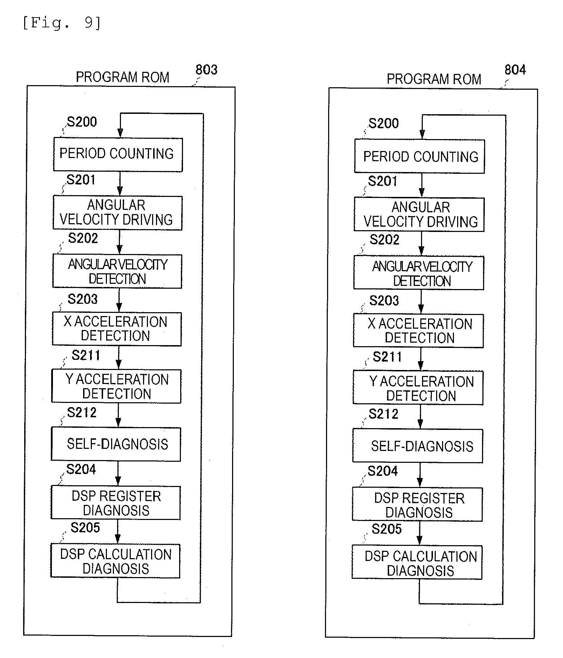

Fig. 9 shows a program which is stored in the program ROMs 803 and 804 shown in Fig. 8. A configuration is made in which the whole processing of the two program ROMs shown in Fig. 2 according to the first embodiment is executed by one program ROM, and the same program is stored in the two program ROMs.

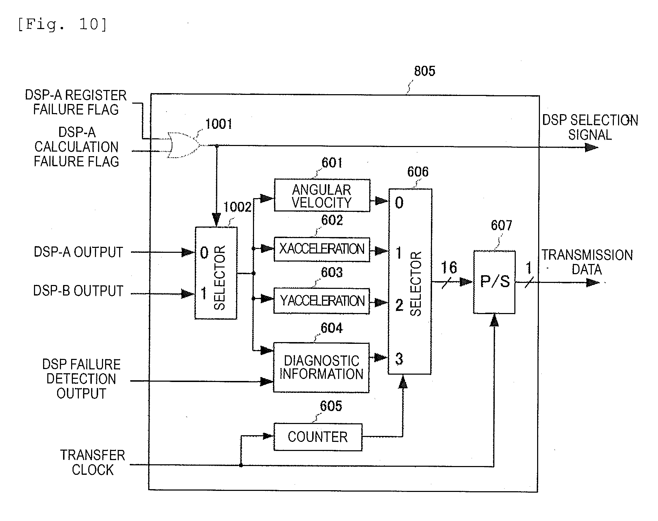

Fig. 10 shows an example of the communication unit 805 of Fig. 8. An OR circuit 1001 is means for outputting "1" as the DSP selection signal when at least one of failure flag signals of the register unit and the calculation unit of the DSP-A output from the DSP failure detection unit 158 of Fig. 5 indicates a failure. A selector 1002 is means for selecting an angular velocity detection signal, an X acceleration detection signal, and a Y acceleration detection signal from the DSP-A, a diagnostic result signal, and the above-described signals from the DSP-B, selects and outputs the output from the DSP-A when the DSP selection signal is "0", and selects and outputs the output of the DSP-B when the DSP selection signal is "1". Other blocks are subjected to the same processing as in the communication block diagram of Fig. 6 according to the first embodiment.

### Reference Signs List

101: angular velocity sensor, 102: vibrator, 103: fixed electrode, 104, 105: electrode, 106, 107: fixed electrode, 110: capacity detector, 112: capacity detector, 121: X direction acceleration sensor, 122: Y direction acceleration sensor, 128, 129: vibrator, 130 to 133: electrode, 135, 136: capacity detector, 137: temperature sensor, 138: AD converter, 139: diagnostic voltage control unit, 140: X-axis direction acceleration characteristic correction unit, 141: Y-axis direction acceleration characteristic correction unit, 145 to 149: AD converter, 147: DA conversion unit, 150: digital signal processor, 151: program ROM, 152: command execution unit, 153: register unit, 154: calculation unit, 155: RAM, 156: DSP failure detection unit, 160: digital signal processor, 161: program ROM, 162: command execution unit, 163: register unit, 164: calculation unit, 171: communication unit, 501: diagnostic data ROM, 502: expected output value ROM, 503: period counter, 504 to 509: comparator, 510, 511: failure flag generation unit, 601 to 604: register, 605: counter, 606: selector, 607: parallel/serial converter, 801, 802: selector, 803, 804: program ROM, 805: communication unit

## Claims

1. An inertial force detection device which has a vibrating body displaceable in a first direction and a second direction perpendicular to each other and detects, as angular velocity, the amount of displacement when the vibrating body is displaced in the second direction due to the occurrence of angular velocity in a state where the vibrating body is made to vibrate in the first direction, the inertial force detection device comprising:
digital signal processing means for detecting the amount of displacement in the first direction and the second direction as acceleration;
means for detecting a failure in a register unit and a calculation unit of the digital signal processing means,
means for outputting a detection result of the means for detecting a failure to the outside.

2. An inertial force detection device comprising:
a vibrating body which is displaceable in a first direction and a second direction perpendicular to each other;
first digital signal processing means for detecting the amount of displacement in the first direction as acceleration;
second digital signal processing means for detecting the amount of displacement in the second direction as acceleration;
means for detecting a failure in register units and calculation units of the two digital signal processing means; and
means for outputting a detection result of the means for detecting a failure to the outside.

3. An inertial force detection device which has a vibrating body displaceable in a first direction and a second direction perpendicular to each other, and detects, as angular velocity, the amount of displacement when the vibrating body is displaced in the second direction due to the occurrence of angular velocity in a state where the vibrating body is made to vibrate in the first direction, the inertial force detection device comprising:
first digital signal processing means for detecting the amount of displacement in the first direction and the second direction as acceleration;
second digital signal processing means for executing the same processing in parallel with the first digital signal processing means;
means for detecting a failure in register units and calculation units of the first and second digital signal processing means; and
means for selectively outputting detection signals of angular velocity and acceleration by the first and second digital signal processing means according to failure detection results of the first and second digital signal processing means.

4. The inertial force detection device according to any one of claims 1 to 3,
wherein the register unit of the digital signal processing means has a plurality of registers,
the calculation unit has a plurality of calculators,
the means for detecting a failure in the register unit and the calculation unit executes failure detection processing in the same period as the detection processing of angular velocity and acceleration, and
failure detection processing which is executed in one period is failure detection of one register and one calculator.

5. The inertial force detection device according to any one of claims 1 to 3,
wherein the digital signal processing means is a digital signal processor or a microprocessor.
